Europäisches Patentamt

European Patent Office

Office européen des brevets

(11) Veröffentlichungsnummer: **0 259 729 B1**

(12) **EUROPÄISCHE PATENTSCHRIFT**

(45) Veröffentlichungstag der Patentschrift: 07.08.91

(51) Int. Cl.⁵: **H02K 11/00**, H02K 19/36

(21) Anmeldenummer: **87112574.6**

(22) Anmeldetag: **28.08.87**

(54) **Gestufter Elektronikbaustein für eine rotierende Thyristorerregung an elektrischen Maschinen.**

(30) Priorität: **12.09.86 DE 3631161**

(43) Veröffentlichungstag der Anmeldung:
**16.03.88 Patentblatt 88/11**

(45) Bekanntmachung des Hinweises auf die
Patenterteilung:
**07.08.91 Patentblatt 91/32**

(84) Benannte Vertragsstaaten:
**AT BE CH DE FR LI NL**

(56) Entgegenhaltungen:
CH-A- 449 758    FR-A- 1 569 097
FR-A- 2 189 928    FR-A- 2 219 559
FR-A- 2 252 689    US-A- 3 295 046

(73) Patentinhaber: **Siemens Aktiengesellschaft**
**Wittelsbacherplatz 2**
**W-8000 München 2(DE)**

(72) Erfinder: **Brökelschen, Hans-Jürgen**
**Völklinger Strasse 29**
**W-4330 Mülheim/Ruhr(DE)**
Erfinder: **Fehm, Udo**
**Braunsbacher Strasse 20E**
**W-8510 Fürth(DE)**
Erfinder: **Grünewald, Peter, Dipl.-Ing.(FH)**
**Berghausweg 19**
**W-4300 Essen(DE)**
Erfinder: **Weidner, Jürgen, Dipl.-Ing.**
**Am Ehrenmal 35**
**W-4300 Essen 14(DE)**

Rank Xerox (UK) Business Services

## Beschreibung

Die vorliegende Erfindung betrifft einen Baustein mit elektronischen Elementen gemäß dem Oberbegriff des Anspruchs 1. Solche Bausteine sind bei rotierenden Gleichrichteranordnungen allgemein bekannt und beispielsweise aus der DE-C-32 06 388 entnehmbar.

Ein gattungsgemäßer Baustein ist auch der FR-A-2 252 689 entnehmbar. Der dort vorgestellte Baustein mit einem Thyristor nebst Ansteuerschaltung ist zwar besonders kompakt gestaltet, im Hinblick auf Montage- und Wartungsfreundlichkeit sowie Störsicherheit jedoch ungünstig, da die externen Anschlüsse an den Baustein praktisch freiliegen und nur mit erheblichem Aufwand gegen betriebliche Beeinträchtigungen gesichert werden können.

Seit langem ist man bemüht, rotierende Thyristoranordnungen unter den Gesichtspunkten Platzersparnis, Störsicherheit und Wartungsfreundlichkeit zu optimieren. Dies stellt nach wie vor ein erhebliches Problem dar, weil sich die einzelnen Forderungen teilweise widersprechen.

Aufgabe der vorliegenden Erfindung ist die Schaffung von Bausteinen, mit denen rotierende Thyristorerregungen von elektrischen Maschinen unter möglichst guter Berücksichtigung der obengenannten Anforderungen aufgebaut werden können. Zur Lösung dieser Aufgabe wird ein Baustein gemäß den kennzeichnenden Merkmalen des Anspruchs 1 vorgeschlagen. Während nach dem Stand der Technik zwar zufällig aufgrund der verwendeten Einzelteile Bausteine mit irgendwelchen Stufen bekannt sind und auch zusammensteckbare Baugruppen auf vielen Gebieten der Technik vorkommen, wird gemäß der vorliegenden Erfindung eine besonders auf die Bedingungen rotierender Thyristorerregungen abgestimmte Bauform vorgeschlagen. Bei rotierenden Anordnungen wirken im wesentlichen Fliehkräfte auf die Bauteile, d. h. Kräfte, die die Bauteile in radialer Richtung gegen den Innenumfang des Trägerrades drücken.

Diese Kräfte wirken auch auf die elektrischen Verbindungen, was bei der Konstruktion zu berücksichtigen ist. Durch eine stufenförmige Ausgestaltung der Bausteine und die erfindungsgemäße Anordnung von Kontakten lassen sich diese Kräfte besser beherrschen. Die Anordnung der Kontakte bewirkt, daß die Fliehkräfte die Kontaktkräfte nicht verändern, wodurch die Auslegung und die Betriebssicherheit der Kontakte verbessert werden kann. Je nach der Anzahl der nötigen elektrischen Verbindungen können Kontakte in mehreren Ebenen auf mehreren Stufen angeordnet werden.

Weitere Ausgestaltungen der Erfindung sind in den Unteransprüchen aufgeführt. Gemäß dem Anspruch 2 bewirkt die gestufte Form der Bausteine, daß nach dem Zusammenstecken die Kontakte durch eine über ihnen liegende Stufe vor in radialer Richtung einfallenden Partikeln geschützt sind. Dies wirkt sich auf die Betriebssicherheit aus, da die zum Teil hohe Spannungen oder Ströme führenden Kontakte vor elektrisch leitenden Niederschlägen geschützt werden müssen.

Um die Wartungsfreundlichkeit der aus den erfindungsgemäßen Bausteinen aufgebauten gesamten Thyristorerregung noch zu verbessern, können die einzelnen Bausteine selbst wiederum gemäß Anspruch 6 aus mehreren zusammensteckbaren Teilen bestehen. Bevorzugt werden dabei solche Teile einzeln ausgeführt, die erfahrungsgemäß häufiger ausgetauscht werden müssen als andere. Dies trifft beispielsweise für die Kondensatoren der sogenannten RC-Beschaltung zu.

Weitere Einzelheiten der Erfindung und der übrigen Unteransprüche werden anhand der Zeichnung näher erläutert.

Ein weiterer wesentlicher Gedanke der Erfindung ist in den Ansprüchen 13 bis 18 enthalten. Gemäß Anspruch 13 enthält ein Baustein sowohl die Thyristoransteuerungsbeschaltung wie auch die u. a. aus Leistungswiderständen und Kondensatoren bestehende RC-Beschaltung. Dies ist eine an sich ungewöhnliche Maßnahme, da diese beiden Teile der rotierenden Gleichrichteranordnung aus Gründen der Störsicherheit und der Spannungsfestigkeit bisher gewöhnlich getrennt angeordnet werden. Die Unterbringung in einem einzigen Baustein ist jedoch äußerst platzsparend und vereinfacht den Aufbau einer rotierenden Gleichrichteranordnung durch geringere Anzahl von Bauelementen und Verbindungen.

Um trotz Unterbringung in einem Baustein Spannungsfestigkeit und Störsicherheit zu gewährleisten, wird im Anspruch 14 ein besonderer Aufbau dieses Bausteins in mehreren Schichten vorgeschlagen, wie anhand der Zeichnung noch näher erläutert wird. Weitere Einzelheiten und Besonderheiten sind in den Ansprüchen 15 bis 18 angegeben.

Ein Ausführungsbeispiel mit weiteren Einzelheiten, soweit sie für das Verständnis der Erfindung von Bedeutung sind, ist in der Zeichnung dargestellt, und zwar zeigen

Fig. 1 einen schematischen Blockschaltplan der Thyristorerregung,

Fig. 2 eine Seitenansicht von zwei zusammengesteckten erfindungsgemäßen Bausteinen,

Fig. 3 eine perspektivische Ansicht eines kombinierten Bausteines mit Thyristoransteuerungsbeschaltung und RC-Beschaltung,

Fig. 4 eine andere Ansicht des Bausteines in Fig. 3,

Fig. 5 den oberen Teil dieses Bausteines mit teilweise abgehobenem Aufsatzelement,

Fig. 6 einen Querschnitt durch das Gehäuse dieses Bausteines,

Fig. 7 eine Ansicht von oben auf das Aufsatzelement in schematischer Darstellung und

Fig. 8 einen Querschnitt durch das Aufsatzelement im Bereich der hochspannungsfesten Steckkontakte.

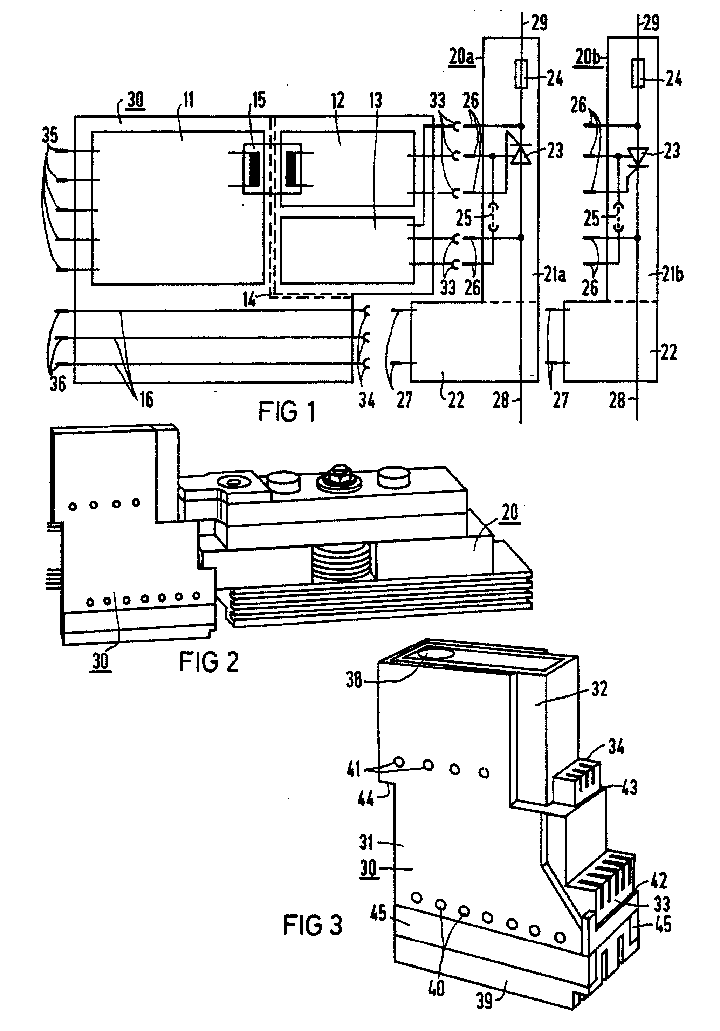

Fig. 1 zeigt einen schematischen Blockschaltplan für eine rotierende Gleichrichteranordnung. Diese Anordnung enthält eine Thyristoransteuerungsbeschaltung 11, eine Impulsübertragungseinheit 12, eine sogenannte RC-Beschaltung 13, u. a. bestehend aus Leistungswiderständen und Kondensatoren, sowie den eigentlichen Thyristorbaustein 20. Von diesem Thyristorbaustein 20 gibt es zwei Varianten 20a, 20b für die beiden Stromrichtungen, die sich durch die Polung des Thyristors 23 unterscheiden. Beide Varianten 20a, 20b können jedoch so aufgebaut werden, daß sie mit der gleichen Thyristoransteuerungsbeschaltung 11 bzw. RC-Beschaltung 13 zusammensteckbar sind.

Jeder Thyristorbaustein 20a, 20b besteht aus der eigentlichen Thyristoreinheit 21a, 21b und einer zugehörigen Stromüberwachungseinheit 22, welche beide vorzugsweise im gleichen Baustein untergebracht sind. Die Thyristoreinheiten 21a, 21b enthalten jeweils einen Thyristor 23, eine Sicherung 24, eine vorbereitete Steckverbindung 25, welche zur Betriebsumschaltung auf einfachen Gleichrichterbetrieb, z. B. bei Ausfall der Thyristoransteuerungsbeschaltung 11, dient. Durch Kontaktstecker 26 können die notwendigen Verbindungen der Thyristoreinheit 21a, 21b hergestellt werden. Gleichzeitig können durch Kontaktstecker 27 die Verbindungen der Stromüberwachungseinheit zu anderen Bausteinen hergestellt werden. Ferner weist der Baustein 20 die üblichen Zu- bzw. Ableitungen 28, 29 für den vom Thyristor 23 gesteuerten Strom auf.

Wie im Blockschaltbild schematisch angedeutet ist, enthält der Baustein 30 in einer Einheit sowohl die Thyristoransteuerungsbeschaltung 11, wie auch eine Impulsübertragungseinheit 12 und die RC-Beschaltung 13. Dabei müssen Impulsübertragsungseinheit 12 und RC-Beschaltung 13 durch eine hochspannungsfeste Trennung 14 von der Thyristoransteuerungsbeschaltung 11 getrennt sein, wobei die Impulsübwertragung von der Thyristoransteuerungsbeschaltung 11 zur Impulsübertragungseinheit 12 mittels eines Kopplers 15, vorzugsweise eines Optokopplers, erfolgt. Die hochspannungsfeste Trennung 14 muß ferner durch eine nicht dargestellte Abschirmung zwischen den genannten Bauteilen ergänzt werden. Ferner enthält der Baustein 30 noch durchgehende elektrische Leitungen 16, welche Kontaktstecker 36 auf der einen Seite des Bausteins 30 mit Kontaktbuchsen 34 auf der anderen Seite verbinden. Im vorliegenden Fall ist eine der Leitungen 16 unbenutzt und dient als Reserve für andere Schaltungsvarianten, während die beiden übrigen Leitungen die Verbindungen zur Stromüberwachungseinheit 22 herstellen. Die Thyristoransteuerungsbeschaltung 11 steht ebenfalls über Kontaktstecker 35 mit weiteren elektronischen Einrichtungen zur Stromversorgung, Impulsgabe etc. in Verbindung. Andererseits werden die von der Thyristoransteuerungsbeschaltung 11 aufbereiteten und zur Impulsübertragungseinheit 12 weitergeleiteten Signale zu Kontaktbuchsen 33 geführt. Mittels solcher Kontaktbuchsen 33 werden auch die notwendigen Verbindungen der RC-Beschaltung 13 mit der Thyristoreinheit 21a bzw. 21b hergestellt.

Wie in Fig. 1 schematisch angedeutet ist, können die Bausteine 20 und 30 an ihren Stirnseiten gestuft aufgebaut sein, wobei die Kontakte 33, 34, 35, 36 bzw. 26, 27 in Gruppen und ggf. auf unterschiedlichen Stufen angeordnet sein können.

Fig. 2 zeigt zur Veranschaulichung der tatsächlichen Platzverhältnisse zusammengesteckte Bausteine 20 und 30.

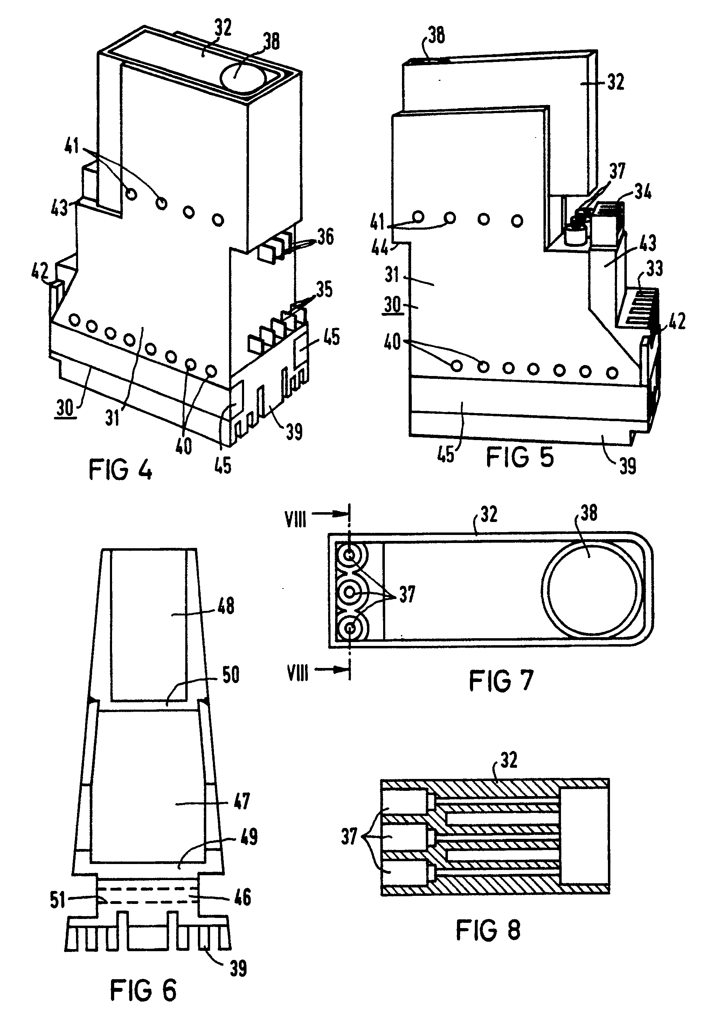

In den Fig. 3 bis 8 sind Einzelheiten eines besonderen Ausführungsbeispiels der Erfindung in verschiedenen Ansichten und Ausschnitten dargestellt, um das Prinzip der Erfindung zu veranschaulichen. Es handelt sich jedoch nur um eine von vielen Möglichkeiten der Ausführung der Erfindung.

Der in den Fig. 3 bis 8 dargestellte Baustein 30 ist aus einem Gehäuseunterteil 31 und einem Aufsatzelement 32, welche zusammensteckbar sind, aufgebaut. Er enthält an einer Stirnseite auf 2 Stufen 42, 43 angeordnete Gruppen von Kontaktbuchsen 33 bzw. 34 und an der anderen Stirnseite unter einem Vorsprung 44 angeordnete Gruppen von Kontaktsteckern 35 bzw. 36. Das Aufsatzelement 32 weist über drei hochspannungsfeste Steckkontakte 37 Hochspannungsverbindungen zum Gehäuseunterteil auf. Das Aufsatzelement 32 enthält die Kondensatoren 38 der RC-Beschaltung 13, im vorliegenden Fall drei Kondensatoren.

Vom Aufbau her besteht der Baustein 30 aus drei Schichten, nämlich einer unteren Schicht 46, welche die Leistungswiderstände der RC-Beschaltung 13 enthält, einer mittleren Schicht 47, welche die Thyristoransteuerungsbeschaltung 11, vorzugsweise auf einer Schaltplatine angeordnet, enthält und einer oberen Schicht 48, in welcher das Aufsatzelement 32 mit den Kondensatoren 38 untergebracht ist. Die einzelnen Schichten 46, 47, 48 sind durch Zwischenböden 49, 50 voneinander getrennt, die als Abschirmung und zur Stabilisierung des Gehäuses dienen. Die untere Schicht 46 ist als Kühlkörper 39 ausgebildet und nach Einbau des Bausteines 30 dem Innenumfang des Trägerrades zugekehrt. Diese untere Schicht weist vorzugsweise Querbohrungen 51 auf, in welcher die Leistungswiderstände der RC-Beschaltung mit gutem Wärmekontakt zu den Wänden untergebracht sind.

Isolierleisten 40 schließen die Querbohrungen 51 zu den Seiten des Bausteines 30 hin ab und dienen der gegenseitigen Isolierung bzw. dem Schutz der Zuleitungen der Leistungswiderstände. Bei der bevorzugten Ausführung der Erfindung ist nicht nur das Aufsatzelement 32 mit den Kondensatoren 38 leicht auswechselbar, sondern es kann nach Lösen von Befestigungsmitteln auch die Thyristoransteuerungsbeschaltung 11 mit der Impulsübertragungseinheit 12 nach einer Stirnseite des Bausteins 30 aus der mittleren Schicht 47 mitsamt den Kontakten 33, 34, 35, 36 herausgezogen werden. Der Baustein 30 ist daher insgesamt sehr wartungsfreundlich. Wie anhand von Fig. 1 bereits erläutert, kann der Baustein 30 mehrere von einer Stirnseite zur anderen durchgehende elektrische Leitungen 16 mit Kontaktbuchsen 34 bzw. Kontaktsteckern 36 enthalten. Im vorliegenden Ausführungsbeispiel sind diese Leitungen 16 im oberen Teil der mittleren Schicht 47 in einer Zwischenebene angeordnet und zu einer herausnehmbaren Einheit mit der Thyristoransteuerungsbeschaltung 11 und der Impulsübertragungseinheit 12 verbunden. Eine gesondert angeordnete Zwischenebene für solche durchgehende elektrische Leitungen 16 ist jedoch ebensogut möglich.

Wie an sich bekannt, kann ein erfindungsgemäßer Baustein noch mit Gewindelöchern 41 für Gewichtsausgleichsschrauben und mit Kühlbohrungen und dergleichen versehen sein.

Die vorliegende Erfindung eignet sich für rotierende Gleichrichteranordnungen mittlerer bis großer Leistung und ist besonders platzsparend und wartungsfreundlich.

## Patentansprüche

1. Baustein (20; 30) mit elektronischen Elementen, insbesondere Thyristoren und/oder deren Beschaltung, für eine rotierende Thyristorerregung an einer elektrischen Maschine, insbesondere an einem Turbogenerator, wobei der Baustein am Innenumfang eines mit einer Welle der elektrischen Maschine rotierenden Trägerrades neben vielen gleichartigen Bausteinen angeordnet werden kann, **gekennzeichnet durch** folgende Merkmale:

   a) der Baustein (20; 30) weist zumindest eine in Axialrichtung der elektrischen Maschine anzuordnende gestufte Seite mit mindestens einer Stufe (42, 43, 44) auf;
   b) der Baustein (20; 30) weist auf bzw. unter der Stufe (42, 43, 44) Kontaktbuchsen (33, 34) und/oder Kontaktstecker (35, 36) auf;
   c) die Kontaktbuchsen (33, 34) bzw. Kontaktstecker (35, 36) haben etwa radial ausgerichtete, durch Fliehkräfte nicht beeinflußbare Kontaktflächen;

   d) der Baustein (20; 30) ist an der gestuften Seite mit mindestens einem entsprechend gegensinnig geformten und mit Kontaktbuchsen und/oder Kontaktsteckern ausgerüsteten - anderen Baustein unter Herstellung mehrerer elektrischer Verbindungen zusammensteckbar.

2. Baustein nach Anspruch 1, **dadurch gekennzeichnet,** daß die Kontaktbuchsen (33, 34) bzw. Kontaktstecker (35, 36) so angeordnet sind, daß sie nach dem Zusammenstecken von zwei Bausteinen (20; 30) vor in radialer Richtung einfallenden Partikeln durch, eine über ihnen liegende Stufe (44) eines der beiden Bausteine geschützt sind.

3. Baustein nach Anspruch 1 oder 2, **dadurch gekennzeichnet,** daß die Kontakte (33, 34, 35, 36) Messerkontakte sind, wobei die Kontaktbuchsen (33, 34) an zwei rechtwinklig zueinander stehenden Seiten offen sind, so daß ein Einstecken der Kontaktstecker (35, 36) in radialen und/oder axialen Richtungen möglich ist.

4. Baustein nach Anspruch 1, 2 oder 3, **dadurch gekennzeichnet,** daß die Kontaktstecker (35, 36) eines Bausteines jeweils unterhalb einer überhängenden Stufe (44) aus einer axialen Stirnwand des Bausteines herausstehen und die Kontaktbuchsen (33, 34) jeweils auf einer vorstehenden Stufe (42, 43) angeordnet sind, oder umgekehrt.

5. Baustein nach einem der vorhergehenden Ansprüche, **dadurch gekennzeichnet,** daß eine oder beide gestuften (42, 43, 44) Seiten zwei oder mehr Stufen (42, 43) aufweisen, auf bzw. unter denen jeweils Kontakte (33, 34) angeordnet sind.

6. Baustein nach einem der vorhergehenden Ansprüche, **dadurch gekennzeichnet,** daß der Baustein (30) selbst aus zwei oder mehr mechanisch und mit elektrischen Kontakten (37) zusammensteckbaren Teilen (31, 32) besteht, die zusammen die Stufenform bilden.

7. Baustein nach einem der vorhergehenden Ansprüche, **dadurch gekennzeichnet,** daß der Baustein (20) eine an sich bekannte Thyristoreinheit (21)mit Kühlkörper und eine Stromüberwachungseinheit (22) enthält.

8. Baustein nach einem der Ansprüche 1 bis 6, **dadurch gekennzeichnet,** daß der Baustein (30) eine an sich bekannte Beschaltung für eine Thyristoreinheit enthält.

9. Baustein nach Anspruch 8, **dadurch gekennzeichnet**, daß die elektronischen Teile in einem Gehäuse aus Aluminium oder dergleichen integriert sind, welches gleichzeitig als Kühlkörper für die sich erwärmenden Elemente dient.

10. Baustein nach Anspruch 9, **dadurch gekennzeichnet**, daß das Gehäuse Kühlkanäle (40) aufweist.

11. Baustein nach Anspruch 9 oder 10, **dadurch gekennzeichnet**, daß das Gehäuse an seinen Seitenflächen Gewichtsausgleichsschrauben in Gewindelöchern (41) aufweist.

12. Baustein nach einem der Ansprüche 8 bis 11, **dadurch gekennzeichnet**, daß der Baustein (30) aus einem Grundelement (31), welches die elektronischen Bauteile, ausgenommen die Kondensatoren (38) der sogenannten RC-Beschaltung, enthält, und einem aufgesetzten, auswechselbaren, mit hochspannungsfesten Steckkontakten (37) versehenen Aufsatzelement (32), welches die Kondensatoren (38) der RC-Beschaltung enthält, besteht.

13. Baustein nach einem der Ansprüche 8 bis 12, **dadurch gekennzeichnet**, daß der Baustein (30) sowohl die Thyristoransteuerungs-Beschaltung (11) wie auch die u. a. aus Leistungswiderständen und Kondensatoren bestehende RC-Beschaltung (13) enthält.

14. Baustein nach Anspruch 13, **gekennzeichnet durch** folgende Merkmale:
a) Der Baustein (30) ist in Schichten aufgebaut, die etwa parallel zur Innenumfangsfläche des Trägerrades liegen.
b) Eine dem Trägerrad am nächsten liegende untere Schicht (46) enthält die Leistungswiderstände der RC-Beschaltung, vorzugsweise in Querbohrungen (51) des als Kühlkörper (39) ausgebildeten unteren Gehäuseteiles angeordnet.
c) Eine mittlere Schicht (47) enthält die Thyristoransteuerungsbeschaltung (11), vorzugsweise auf einer als Einschub ausgebildeten Schaltplatine angeordnet,
d) Die oberste Schicht (48) enthält die Kondensatoren (38) der RC-Beschaltung (13), vorzugsweise stehend und auswechselbar in einem eigenen Gehäuse (32) angeordnet.

15. Baustein nach Anspruch 14, **dadurch gekennzeichnet**, daß die Verbindungen (52, 53, 54) zwischen Kondensatoren (38) und Widerständen der RC-Beschaltung steckbar (37) gestaltet und außen an der Schicht (47) der Thyristoransteuerungsbeschaltung (11) vorbeigeführt sind.

16. Baustein nach Anspruch 13, 14 oder 15, **dadurch gekennzeichnet**, daß das Gehäuse des Bausteins (30) zur Verhinderung von Störeinflüssen zwischen den Schichten (46, 47, 48) elektrisch leitende Zwischenböden (49, 50) aufweist, die gleichzeitig als Querstreben zur Stabilisierung dienen.

17. Baustein nach einem der Ansprüche 13 bis 16, **dadurch gekennzeichnet**, daß die Thyristoransteuerungsbeschaltung (11) gegenüber der RC-Beschaltung (13) und einer Impulsübertragungseinheit (12) eine hochspannungsfeste Trennung (14) aufweist und die Impulsübertragungseinheit (12) durch einen Optokoppler (15) oder dergleichen an die Thyristoransteuerungsbeschaltung (11) galvanisch getrennt angekoppelt ist.

18. Baustein nach einem der Ansprüche 13 bis 17, **dadurch gekennzeichnet**, daß der Baustein (30) eine Zwischenenbene mit von einem zum anderen Ende durchgehenden elektrischen Leitungen (16) aufweist, welche in Kontaktbuchsen (34) bzw. Steckern (36) enden.

**Claims**

1. Module (20; 30) with electronic components, in particular thyristors and/or their circuits, for a rotating thyristor excitation on an electrical machine, in particular on a turbogenerator, whereby the module can be arranged on the inner circumference of a carrier wheel, rotating with a shaft of the electrical machine, next to many similar modules, characterized by the following features:
a) the module (20; 30) has at least one stepped side, to be arranged in the axial direction of the electrical machine, with at least one step (42, 43, 44);
b) the module (20; 30) has on or below the step (42, 43, 44) contact sockets (33, 34) and/or contact plugs (35, 36);
c) the contact sockets (33, 34) or contact plugs (35, 36) have contact surfaces which are aligned approximately radially and cannot be influenced by centrifugal forces;
d) the module (20; 30) can be assembled at the stepped side with at least one other module, formed correspondingly in opposing manner and equipped with contact sockets and/or contact plugs, with the production of several electrical connections.

2. Module according to claim 1, characterized in that the contact sockets (33, 34) or contact plugs (35, 36) are arranged in such a way that after the assembling of two modules (20; 30) they are protected from particles, falling in in radial direction, by means of a step (44), lying above them, of one of the two modules.

3. Module according to claim 1 or 2, characterized in that the contacts (33, 34, 35, 36) are blade contacts, whereby the contact sockets (33, 34) are open at two sides standing at right angles to one another, so that an insertion of the contact plugs (35, 36) in radial and/or axial directions is possible.

4. Module according to claim 1, 2 or 3, characterized in that the contact plugs (35, 36) of a module in each case beneath an overhanging step (44) project out of an axial front wall of the module and the contact sockets (33, 34) are in each case arranged on a projecting step (42, 43), or vice versa.

5. Module according to one of the preceding claims, characterized in that one or both stepped (42, 43, 44) sides have two or more steps (42, 43), on or beneath which in each case contacts (33, 34) are arranged.

6. Module according to one of the preceding claims, characterized in that the module (30) itself consists of two or more parts (31, 32) which can be assembled mechanically with electrical contacts (37), which parts (31,32) together form the step shape.

7. Module according to one of the preceding claims, characterized in that the module (20) contains a thyristor unit (21) known per se with cooling body, and a current monitoring unit (22).

8. Module according to one of claims 1 to 6, characterized in that the module (30) contains circuits known per se for a thyristor unit.

9. Module according to claim 8, characterized in that the electronic parts are integrated in a housing of aluminium or suchlike, which at the same time serves as cooling body for the elements as they warm up.

10. Module according to claim 9, characterized in that the housing has cooling ducts (40).

11. Module according to claim 9 or 10, characterized in that the housing has on its side surfaces weight compensating screws in threaded holes (41).

12. Module according to one of claims 8 to 11, characterized in that the module (30) consists of a base element (31) which contains the electronic component parts, with the exception of the capacitors (38) of the so-called RC circuit, and a mounted, exchangeable mounting element (32), provided with high-voltage-stable plug-in contacts (37), which contains the capacitors (38) of the RC circuit.

13. Module according to one of claims 8 to 12, characterized in that the module (30) contains both the thyristor control circuit (11) and the RC circuit (13) consisting among other things of power resistances and capacitors.

14. Module according to claim 13, characterized by the following features:
   a) The module (30) is constructed in layers which lie approximately in parallel with the inner circumferential surface of the carrier wheel.
   b) A lower layer (46) lying next to the carrier wheel contains the power resistances of the RC circuit, preferably arranged in cross holes (51) of the lower housing part constructed as cooling body (39).
   c) A middle layer (47) contains the thyristor control circuit (11), preferably arranged on a switching circuit board constructed as an insert.
   d) The uppermost layer (48) contains the capacitors (38) of the RC circuit (13), preferably arranged standing and exchangeable in a specific housing (32).

15. Module according to claim 14, characterized in that the connections (52, 53, 54) between capacitors (38) and resistances of the RC circuit are formed as plug-in type (37) and on the outside are conducted past the layer (47) of the thyristor control circuit (11).

16. Module according to claim 13, 14 or 15, characterized in that to prevent disturbing influences the housing of the module (30) has electroconductive intermediate floors (49, 50) between the layers (46, 47, 48), which floors at the same time serve as cross struts for stabilization.

17. Module according to one of claims 13 to 16, characterized in that the thyristor control circuit (11) has a high-voltage-stable separation (14) opposite the RC circuit (13) and a pulse transmission unit (12) and the pulse transmission unit (12) is coupled in an electrically isolated manner by means of an optical coupler (15) or suchlike on to the thyristor control circuit (11).

18. Module according to one of claims 13 to 17, characterized in that the module (30) has an intermediate plane with continuous electrical lines (16) from one end to the other, which end in contact sockets (34) or plugs (36).

**Revendications**

1. Module (20;30) comportant des composants électroniques, notamment des thyristors et/ou leur câblage, pour une excitation tournante des thyristors, sur une machine électrique, notamment un turbogénérateur, le module pouvant être disposé sur le pourtour intérieur d'une roue de support, qui tourne avec un arbre de la machine électrique, en dehors de nombreux modules similaires, caractérisé par les caractéristiques suivantes :
   a) le module (20;30) possède au moins une face étagée, qui doit être disposé dans la direction axiale de la machine électrique et comporte au moins une partie étagée (42,43,44);
   b) le module (20;30) possède, sur ou au-dessous de la partie étagée (42,43,44), des douilles de contact (33,34) et/ou des fiches de contact (35,36);
   c) les douilles de contact (33,34) ou les fiches de contact (35,36) possèdent des surfaces de contact approximativement radiales, qui ne peuvent pas être influencées par des forces centrifuges;
   d) le module (20;30) peut être interconnecté, au niveau de la face étagée, à au moins un autre module possédant une forme opposée correspondante et équipée de douilles de contact et/ou de fiches de contact, moyennant l'établissement de plusieurs liaisons électriques.

2. Module suivant la revendication 1, caractérisée par le fait que les douilles de contact (33,34) ou les fiches de contact (35,36) sont disposées de telle sorte qu'après l'interconnexion de deux modules (20;30), les douilles et fiches sont protégées vis-à-vis de particules arrivant suivant la direction radiale, par une partie étagée (44), située au-dessus des douilles ou des fiches, de l'un des deux modules.

3. Module suivant la revendication 2, caractérisé par le fait que les contacts (33,34,35,36) sont des contacts à couteaux, les douilles de contact (33,34) étant ouvertes sur deux côtés perpendiculaires entre eux, ce qui permet un enfichage des fiches de contact (35,36) dans des directions radiales et/ou axiales.

4. Module suivant la revendication 1, 2 ou 3, caractérisé par le fait que les fiches de contact (35,36) d'un module font saillie respectivement au-dessous d'une partie étagée en surplomb (44), à partir d'une paroi frontale axiale du module et que les douilles de contact (33,34) sont disposées respectivement sur une partie étagée saillante (42,43) ou inversement.

5. Module suivant l'une des revendications précédentes, caractérisé par le fait qu'une face ou les deux faces étagées (42,43,44) comportent deux ou plusieurs parties étagées (42,43), sur ou au-dessous desquelles sont disposées respectivement des contacts (33,34).

6. Module suivant l'une des revendications précédentes, caractérisé par le fait que le module (30) lui-même est constitué par deux ou un plus grand nombre de parties (31,32) pouvant être interconnectées mécaniquement et à des contacts électriques (37) et créant conjointement la forme étagée.

7. Module suivant l'une des revendications précédentes, caractérisé par le fait que le module (20) contient une unité à thyristors (21) connue en soi comportant un dissipateur de chaleur et une unité (22) de contrôle du courant.

8. Module suivant l'une des revendications 1 à 6, caractérisé par le fait que le module (30) possède un câblage connu en soi pour une unité à thyristors.

9. Module suivant la revendication 8, caractérisé par le fait que les parties électroniques sont intégrées dans un boîtier en aluminium ou analogues, qui sert simultanément de dissipateur de chaleur pour les éléments qui s'échauffent.

10. Module suivant la revendication 9, caractérisé par le fait que le boîtier comporte des canaux de refroidissement (40).

11. Module suivant la revendication 9 ou 10, caractérisé par le fait que le boîtier possède, sur ses faces latérales, des vis d'équilibrage insérées dans des trous taraudés (41).

12. Module suivant l'une des revendications 8 à 11, caractérisé par le fait que le module (30) est constitué par un élément de base (31), qui contient les composants électroniques, à l'exception des condensateurs (38) de ce qu'on appelle le câblage RC, et par un élément rapporté (32), qui est équipé de contacts enfichables (34) résistants à la haute tension et contient les condensateurs (38) du câblage RC.

13. Module suivant l'une des revendications 8 à 12, caractérisé par le fait que le module (30) contient aussi bien le câblage (11) de commande des thyristors que le câblage RC (13) constitué notamment par des résistances de puissance et des condensateurs.

14. Module suivant la revendication 13, caractérisé par les caractéristiques suivantes :
   a) le module (30) est structuré en couches qui sont approximativement parallèles à la surface périphérique intérieure de la roue de support;
   b) une couche inférieure (46), qui est la plus rapprochée de la roue de support, contient les résistances de puissance du câblage RC, qui sont disposées de préférence dans des perçages transversaux (51) de la partie inférieure du boîtier agencée sous la forme d'un dissipateur de chaleur (39);
   c) une couche médiane (47) contient le câblage (11) de commande des thyristors, qui est disposé de préférence sur une plaquette à circuits imprimés réalisée sous la forme d'un tiroir;
   d) la couche supérieure (48) contient les condensateurs (38) du câblage RC (31), qui sont installés de préférence verticaux et d'une manière interchangeable dans un boîtier particulier (32).

15. Module suivant la revendication 14, caractérisé par le fait que les liaisons (52,53,54) entre des condensateurs (38) et des résistances du câblage RC sont agencées de manière à être enfichables (38) et s'étendent extérieurement à proximité de la couche (47) du câblage (11) de commande des thyristors.

16. Module suivant les revendications 13,14 ou 15, caractérisé par le fait que le boîtier du module (30) comporte des fonds intercalaires électriquement conducteurs (49,50), qui servent à empêcher des influences perturbatrices entre les couches (46,47,48) et qui servent simultanément de barrettes transversales de stabilisation.

17. Module suivant l'une des revendications 13 à 16, caractérisé par le fait que le câblage (11) de commande des thyristors est séparé du câblage RC (13) et d'une unité de transmission d'impulsions (12), par une séparation (14) résistant à la haute tension et que l'unité de transmission d'impulsions (12) est accouplée, en étant séparée galvaniquement au câblage (11) de commande des thyristors, par un optocoupleur (15) ou analogue.

18. Module suivant les revendications 13 à 17, caractérisé par le fait que le module (30) possède un plan intercalaire comportant des conducteurs électriques (16) qui s'étendent continûment d'une extrémité jusqu'à l'autre extrémité et se terminent dans des douilles de contact (34) ou dans des fiches (36).

FIG 1

FIG 2

FIG 3

FIG 4

FIG 5

FIG 6

FIG 7

FIG 8